# EUROPEAN PATENT APPLICATION

(11) **EP 4 417 467 A2**
(43) Date of publication of application: **21.08.2024**
(21) Application number: 24157699.0
(22) Date of filing: 14.02.2024
(51) Int. Cl.: B60P 3/075

(54) **VEHICLE LOCKING ASSEMBLY**

(30) Priority: 14.02.2023 US 202363484976 P
(71) Applicant: Lunar Outpost Inc., Golden, Colorado 80401 (US)
(72) Inventor: GEMER, Andrew J., Lafayette, CO 80026 (US); WAGNER, Van, Lakewood, CO 80226 (US); JESTEADT, Bradley, Arvada, CO (US)
(74) Representative: FRKelly

(57) **Abstract**

A vehicle locking assembly is disclosed, which couples a vehicle to a support member, for example using a frangible bolt and an actuator. When actuated, the actuator causes the frangible bolt to fail, thereby decoupling the vehicle from the support member. Ground-engaging members of the vehicle include terrain interaction features along an outer portion, thereby forming a portion of the ground-engaging member where the terrain interaction features (or, as another example, lack thereof) form a contact region that is radially closer to the center of the ground-engaging member as compared to the contact region(s) corresponding to other terrain interaction features. Accordingly, once the fastener is released, the ground-engaging members of the vehicle are actuated, such that the terrain interaction features engage with the plate/surface beneath the vehicle as the radially closer contact region rotates out from under the vehicle, thereby raising the vehicle off the support member.

## Description

### CROSS-REFERENCE TO RELATED APPLICATION

This application claims priority to U.S. Provisional Application No. 63/484,976, titled "Vehicle Locking Assembly," filed on February 14, 2023, the entire disclosure of which is hereby incorporated by reference in its entirety.

### BACKGROUND

A vehicle may be stored or secured for a variety of reasons, for example for transport by another vehicle. However, hardware associated with securing the vehicle may introduce additional complexity. For instance, it may be challenging to secure the vehicle against movement and/or damage during transport, while also ensuring that the vehicle can be reliably released after storage/transport.

It is with respect to these and other general considerations that embodiments have been described. Also, although relatively specific problems have been discussed, it should be understood that the embodiments should not be limited to solving the specific problems identified in the background.

### SUMMARY

Aspects of the present disclosure relate to a vehicle locking assembly that couples a vehicle to a support member (e.g., of a plate), for example using a frangible bolt and an actuator (e.g., a wax motor or a linear actuator) that causes the frangible bolt to fail when actuated, thereby decoupling the vehicle from the support member. Ground-engaging members of the vehicle each include terrain interaction features distributed along an outer portion of the ground-engaging member, such that there is a portion of the ground-engaging member where the terrain interaction features (or, as another example, lack thereof) form a contact region that is radially closer to the center of the ground-engaging member as compared to the contact region(s) corresponding to other terrain interaction features. Accordingly, once the fastener has been released, the ground-engaging members of the vehicle are actuated, such that the terrain interaction features engage with the plate/surface beneath the vehicle as the radially closer contact region rotates out from under the vehicle, thereby raising the vehicle off the support member.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following Figures.
Figure 1A illustrates a side view of an example vehicle with which a vehicle locking assembly may be used according to aspects described herein.
Figure 1B illustrates an example actuation of a ground-engaging member according to aspects described herein.
Figure 1C illustrates a side view of another example support shim according to aspects described herein.
Figure 2A illustrates a rear view of an example vehicle with which a vehicle locking assembly may be used according to aspects described herein.
Figure 2B illustrates a perspective view that depicts aspects of the vehicle and associated vehicle locking assembly of Figure 2A.
Figure 3 illustrates a perspective view of an example plate and example support structures with which a vehicle may be secured according to aspects described herein.
Figure 4A illustrates a perspective view of an example support member and corresponding vehicle locking assembly according to aspects described herein.
Figure 4B illustrates a cross-sectional view of an example vehicle locking assembly with which a vehicle may be secured according to aspects described herein.
Figure 4C illustrates a cross-sectional view of another example vehicle locking assembly according to aspects described herein.
Figure 5A illustrates an overview of an example method for releasing a vehicle that is secured using a vehicle locking assembly according to aspects described herein.
Figure 5B illustrates an overview of an example method for actuating a set of locking assemblies according to aspects described herein.
Figure 6 illustrates an example of a suitable computing environment in which one or more aspects of the present application may be implemented.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

In examples, a vehicle is secured for transport. For example, the vehicle may be a rover that is transported by another vehicle (e.g., a lander and/or a rocket). In these and other examples, restricting movement of the vehicle may reduce the likelihood of damage and may enable different vehicle storage techniques that would otherwise be challenging or impossible. For instance, as a result of transmitting a load more directly between a structural member of the vehicle and another vehicle, other components (e.g., a wheel, motor, driveshaft, gearbox, and/or suspension) of the vehicle may be removed from the load path (or the resulting load on such components may be reduced), thereby reducing the likelihood of damage (e.g., during a rocket launch and/or landing) to these and/or other components. In examples, the vehicle could be stored in a vertical orientation (as compared to a horizontal orientation in which the vehicle may normally operate). However, it may be challenging to secure the vehicle against movement and/or damage during transport, while also ensuring that the vehicle can be reliably released after storage/transport. For instance, reliability may be particularly important in instances where manual intervention is challenging or unavailable, as may be the case for hardware operating on the Moon or on Mars, among other examples.

Accordingly, aspects of the present disclosure relate to a vehicle locking assembly. The disclosed vehicle locking assembly may couple a vehicle to a support member that secures a vehicle to a plate, surface (e.g., of a compartment in which the vehicle is stored), and/or component of another vehicle, among other examples, for example using a frangible bolt or other fastener designed to fail in a controllable manner. In an example, the vehicle locking assembly further includes an actuator (e.g., a wax motor or a linear actuator) that causes the frangible bolt to fail when actuated (e.g., as a result of an expansion force between the support member and the vehicle), thereby decoupling the vehicle from the support member.

Even so, the vehicle may remain supported by the support member and/or a portion of the fastener may extend from the vehicle into the support member, such that movement of the vehicle is restricted. One or more ground-engaging members of the vehicle may each include a set of grousers, paddles, or scoops, among other terrain interaction features, which are distributed along an outer portion of the ground-engaging member. However, the terrain interaction features may be distributed unevenly, such that there is a portion of the ground-engaging member having a contact region that is radially closer to the center of the ground-engaging member as compared to other effective contact region(s) corresponding to one or more of the other terrain interaction features.

Thus, when the vehicle is in a stored configuration, one or more ground-engaging members of the vehicle are positioned such that the radially lower contact region contacts or is otherwise positioned toward the plate or surface to which the vehicle coupled. Such a configuration may thus reduce the clearance of the vehicle, thereby causing the vehicle to rest on the support member. Accordingly, once the fastener has been released, the ground-engaging members of the vehicle may be actuated such that the terrain interaction features now engage with the plate/surface, thereby raising the vehicle off the support member.

While examples are described with respect to various illustrative support members, fasteners, and terrain interaction features, it will be appreciated that any of a variety of other such aspects may be used in other examples without departing from the spirit of this disclosure. Further, it will be appreciated that any number of support members, ground-engaging members, and/or terrain interaction features may be used.

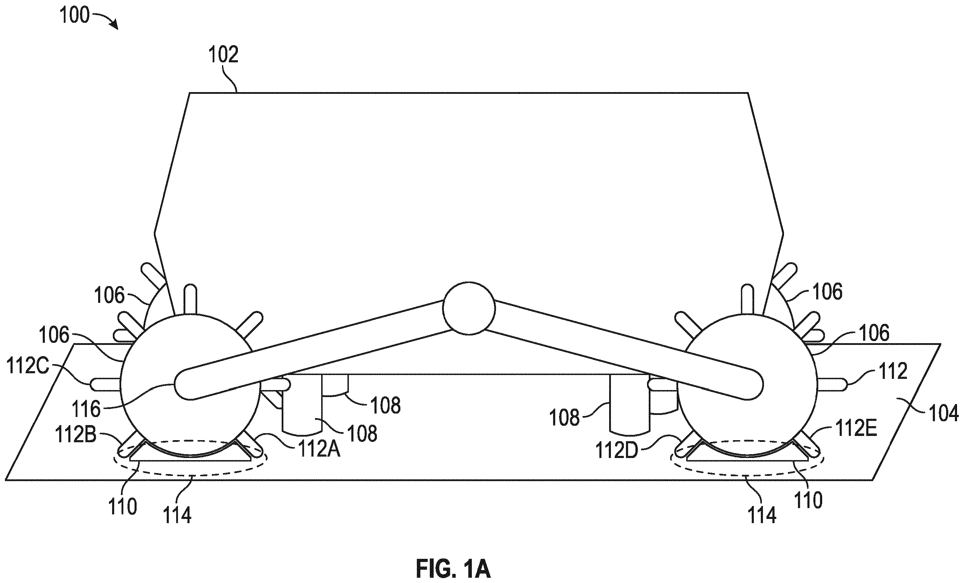

Figure 1A illustrates a side view 100 of an example vehicle 102 with which a vehicle locking assembly may be used according to aspects described herein. As illustrated, vehicle 102 is coupled to plate 104 via support members 108, each of which may include a vehicle locking assembly (not pictured) according to aspects described herein. Vehicle 102 includes ground-engaging members 106, which each include a set of terrain interaction features 112. Additional example aspects of such terrain interaction features are described by U.S. Patent Application No. 17/821,781, filed August 23, 2022, titled "Sample Collection Assembly for a Vehicle," which is hereby incorporated by reference in its entirety.

As noted above, terrain interaction features 112 of ground-engaging members 106 are distributed such that terrain interaction features 112A and 112B form a contact region 114 that is radially closer to hub 116 than the contact region between other terrain interaction features (e.g., terrain interaction features 112B and 112C). Thus, as illustrated, terrain interaction features 112 are not evenly spaced about the outer surface of each ground-engaging member 106 and are instead spaced such that they introduce at least one such radially closer contact region.

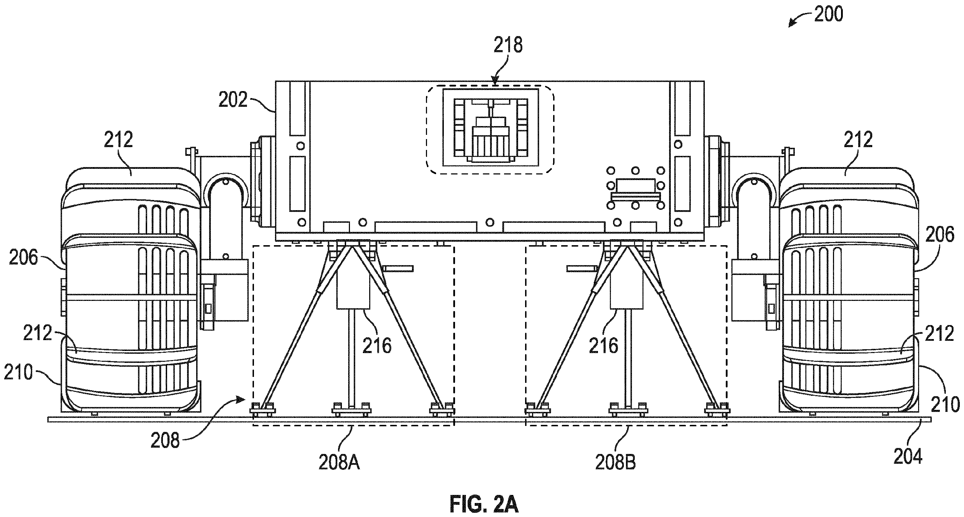

Side view 100 therefore depicts a stored configuration of vehicle 102, in which the clearance of vehicle 102 is reduced as a result of positioning radially lower contact regions 114 of ground-engaging members 106 toward plate 104. In examples, vehicle 102 contacts or is otherwise supported by support members 108, aspects of which are described in greater detail with respect to Figures 2A-2B, 3, and 4A-4C.

As illustrated, support shims 110 are included between ground-engaging members 106 and plate 104. Support shims 110 may be affixed to plate 104 using adhesive and/or one or more mechanical fasteners, among other examples. As illustrated, support shims 110 support the contact regions 114 of ground-engaging members 106. For illustrative purposes, it will be appreciated that Figure 1A depicts clearance between support shims 110 and ground-engaging members 106. In examples, support shims 110 and ground-engaging members 106 may come into contact, thereby restricting movement of the vehicle and increasing the contact points between the vehicle and plate 104. In other examples, a support portion need not contact a ground-engaging member. The inclusion of support shims 110 may additionally or alternatively serve to restrict movement of ground-engaging members 106 and/or may reduce vibration that is transferred from plate 104 to vehicle 102 in transit.

Additionally, or alternatively, the surface of plate 104 is selected and/or prepared to increase the traction of ground-engaging members. For example, the surface may be rough and/or may have grooves or other such features. In examples, grooves of plate 104 are spaced such that they interact with terrain interaction features 112, thereby enabling ground-engaging members 106 to grip onto plate 104. Such aspects may be beneficial in instances where plate 104 is at an angle. Additionally, or alternatively, terrain interaction features 112 further include a region having improved traction, such as a rubber portion or a portion having a coarser surface finish, among other examples.

While examples are described in which a vehicle locking assembly is used to retain vehicle 102 on plate 104 and rotation of ground-engaging members 106 elevates vehicle 102 off support members 108 once corresponding frangible bolt(s) or other fasteners have been released, it will be appreciated that similar ground-engaging members and corresponding techniques may be used in the absence of such fasteners and/or with any of a variety of other vehicle securing mechanisms.

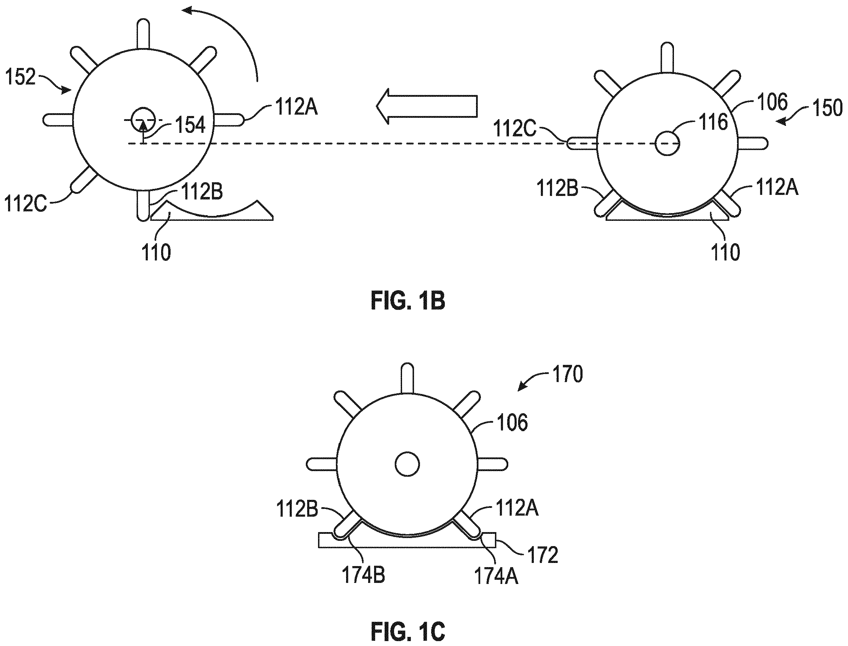

Turning now to Figure 1B, an example actuation of a ground-engaging member is depicted according to aspects described herein. As illustrated, ground-engaging member rotates counterclockwise from position 150 into position 152, thereby achieving an increase in clearance as illustrated by arrow 154.

Figure 1C illustrates a side view 170 of another example support shim according to aspects described herein. As compared to support shim 110 discussed above with respect to Figures 1A and 1B, support shim 172 includes interaction portions 174A and 174B, which each interact with a corresponding terrain interaction feature 112A and 112B of ground-engaging member 106. Inclusion of such interaction portions may thus further increase the traction of ground-engaging members 106, thereby improving the ability of the vehicle to raise itself (e.g., off support members 108, as shown in Figure 1A) according to aspects described herein. Thus, during actuation, terrain interaction feature 112B remains in interaction portion 174B of support shim 172, while ground-engaging member 106 is actuated from position 150 to position 152 (e.g., as shown in Figure 1B), thereby increasing the tractive effort that can be exerted by ground-engaging member 106 when raising vehicle 102 according to aspects described herein.

Figure 2A illustrates a rear view 200 of an example vehicle 202 with which a vehicle locking assembly may be used according to aspects described herein. As illustrated, rear view 200 includes vehicle 202, plate 204, ground-engaging members 206, support members 208 (including support member 208A and support member 208B), support shims 210, and terrain interaction features 212, aspects of which are similar to vehicle 102, plate 104, ground-engaging members 106, support members 108, support shims 110, and terrain interaction features 112 discussed above with respect to Figures 1A-1C and are therefore not necessarily redescribed in detail. Rear view 200 further includes connector 218, which may provide power and/or enable communication with vehicle 202 (e.g., when the vehicle is in a storage configuration).

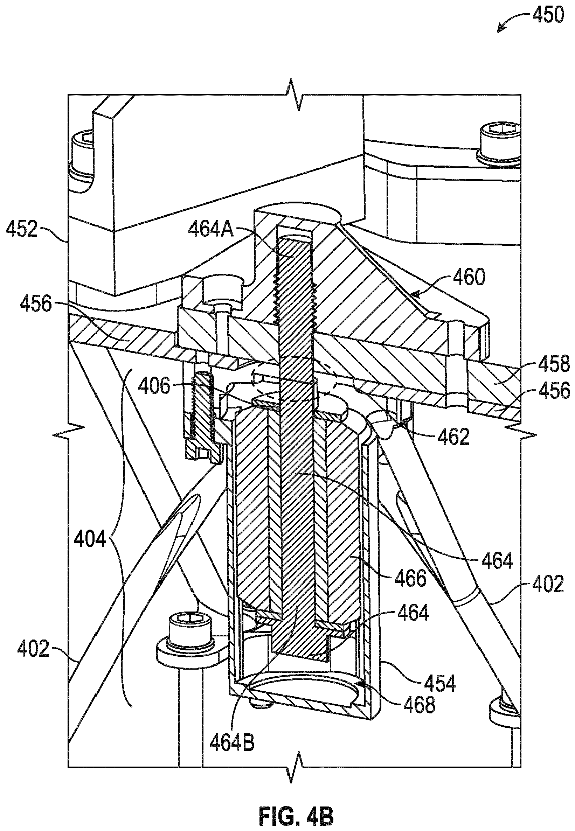

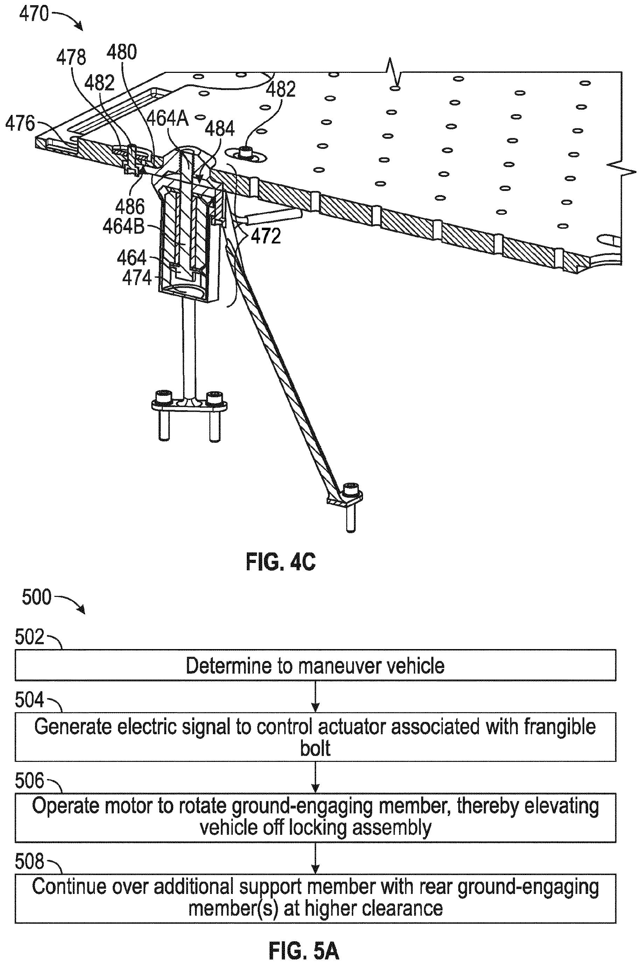

As illustrated, support members 208A and 208B each support a vehicle locking assembly 216. Vehicle locking assemblies 216 thus couple vehicle 202 to support members 208, for example using a fastener (not pictured, see, e.g., fastener 464 in Figures 4B and 4C). In examples, the structure of support members 208 is generated using topology optimization, such that the amount of material used to form support members 208 is reduced or otherwise optimized according to a given set of parameters (e.g., height, maximum supported weight, etc.).

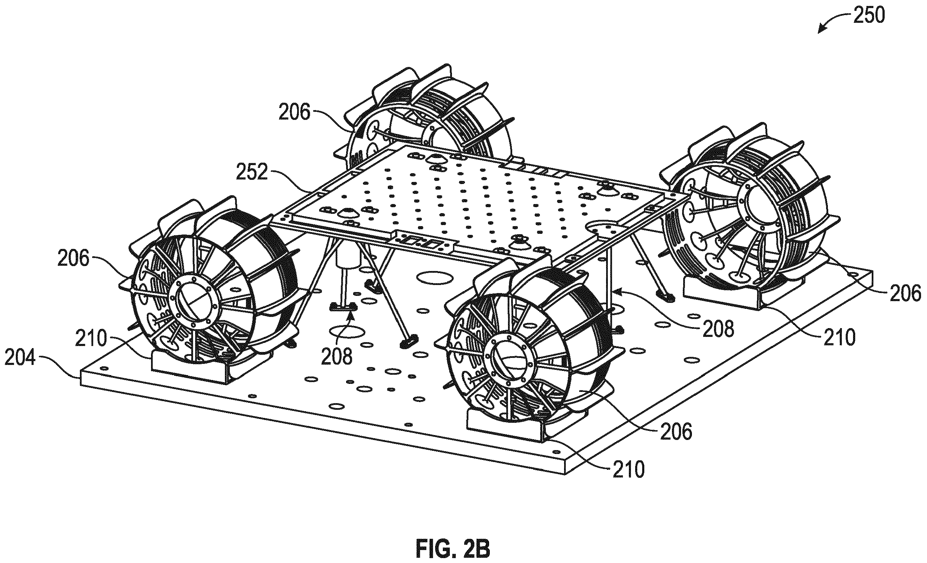

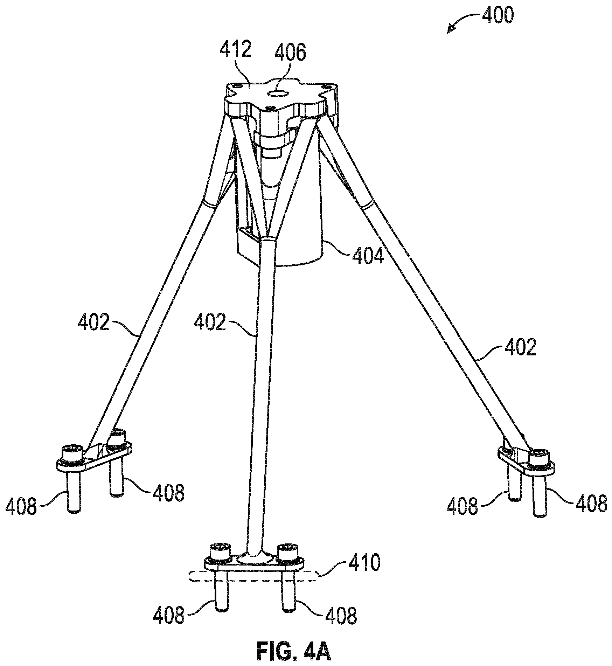

Figure 2B is provided as a perspective view 250 that depicts aspects of the vehicle and associated locking assembly depicted in Figure 2A. As compared to Figure 2A, Figure 2B specifically depicts interface plate 452 of vehicle 202, whereas other aspects of vehicle 202 have been omitted for improved visibility. Additionally, specific aspects of the depicted support assemblies 208 are discussed in greater detail with respect to Figures 4A-4C.

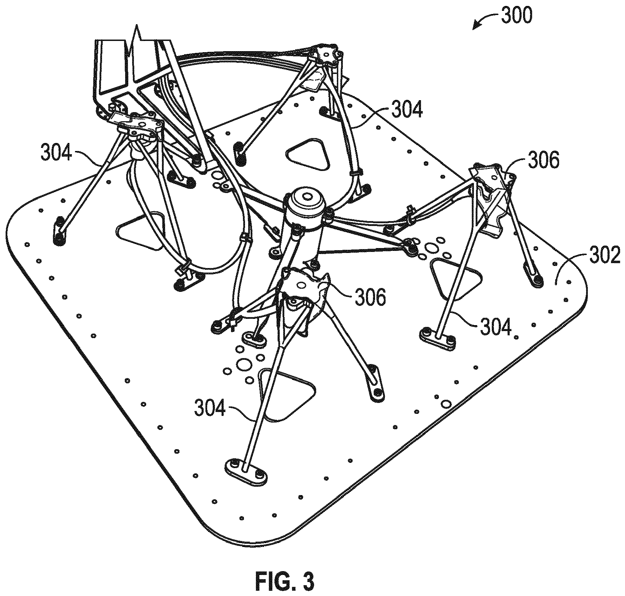

Figure 3 illustrates a perspective view 300 of an example plate 302 and example support members 304 with which a vehicle may be secured according to aspects described herein. As illustrated, support members 304 each support vehicle locking assemblies 306, which may couple a vehicle to plate 302 according to aspects described herein. Aspects of plate 302, support members 304, and vehicle locking assemblies 306 may be similar to those discussed above with respect to Figures 1A-1C and 2A-2B and are therefore not necessarily redescribed below in detail.

Figure 4A illustrates a perspective view 400 of an example support member 402 and corresponding vehicle locking assembly 404 according to aspects described herein. While support member 402 is illustrated as including three Y-shaped subparts, it will be appreciated that any of a variety of other designs may be used in other examples. For example, a cylinder may additionally or alternatively be used to support a vehicle on a plate or other surface or, as another example, additional or fewer subparts may be used in other examples. As noted above, the structure of support member 402 may be determined using topology optimization in some examples.

Support member 402 supports vehicle locking assembly 404, which includes aperture 406 which is configured to permit a frangible bolt or other fastener to extend through to a vehicle (e.g., fastener 464 in Figures 4B and 4C), thereby fastening the vehicle to support member 402 accordingly. In the illustrated example, fasteners 408 are used to fasten support member 402 to a plate or other surface, though it will be appreciated that any of a variety of additional or alternative mechanisms may be used to mechanically couple support member 402 to a plate or surface, among other examples.

In examples, one or more clearance shims 410 are used to shim one or more support members 402 to improve the extent to which the interface surface 412 of the locking assembly 404 is parallel to a corresponding interface surface of the vehicle (e.g., interface plate 456 in Figure 4B or fastener boss 480 in Figure 4C). In examples, the vehicle is placed onto one or more locking assemblies (e.g., four locking assemblies 306, as illustrated in Figure 3), and a gap between each locking assembly and the bottom of the vehicle is measured (e.g., using a feeler gauge). Accordingly, one or more clearance shims may be identified based on the corresponding gap, such that the clearance shims are installed beneath one or more support members of each locking assembly, thereby reducing or closing the measured gap for each locking assembly. This process may be repeated until no gap (or a gap within a predetermined tolerance) remains. It will be appreciated that, in some examples, each support member is shimmed using a clearance shim having the same thickness or, in other examples, different thicknesses may be identified for each support member.

Interface surface 412 may be sanded, polished, electropolished, and/or coated so as to improve thermal and/or electrical conductivity with a corresponding interface surface of the vehicle. Similarly, the interface surface of the vehicle may be sanded, polished, electropolished, and/or coated accordingly. Thus, electrical and/or thermal conductivity may be improved between the locking assembly 404 and the vehicle so as to prevent or reduce arcing between the vehicle and the locking assembly. Additionally, or alternatively, such aspects may thus provide improved thermal coupling between the vehicle and its mount, thereby reducing the associated temperature differential and the likelihood of thermally induced stress. Finally, such aspects may improve signal quality on data lines (e.g., between the vehicle and its host vehicle).

Turning now to Figure 4B, cross-sectional view 450 depicts an example vehicle locking assembly 404 with which vehicle 452 may be secured according to aspects described herein. As illustrated, cross-sectional view 450 includes vehicle 452, interface plate 456, and baseplate 458. Vehicle locking assembly 404 is further illustrated as including fastener boss 460, fastener 464, holder 454, and actuator 466.

Fastener 464 couples with fastener boss 460, thereby mechanically coupling support member 402 to vehicle 452. To release vehicle 452 from support member 402, actuator 466 is used. For example, actuator 466 may be a wax motor or may be any of a variety of other linear actuators. In other examples, fastener 464 is released using pyrotechnics or any of a variety of additional or alternative techniques.

As illustrated, fastener 464 fails along line 462, such that fastener 464 is split into a first half 464A that remains in vehicle 452 and a second half 464B that falls into holder 454. In examples, holder 454 includes a crush puck or other dampening feature, which may be positioned at location 468, thereby dampening the impact of the second half 464B of fattener 464 after actuation of actuator 466. Thus, holder 454 prevents the second half 464B from falling and potentially obstructing operation of vehicle 452. Ground-engaging members of vehicle 452 may thus be operated according to aspects described herein to cause vehicle 452 to lift itself from support members 402, such that the first part 464A of fastener 464 no longer interacts with support members 402 and/or vehicle locking assembly 404. In some instances (e.g., if first half 464A does not extend through aperture 406) and/or depending on the mechanism with which the vehicle is secured, vehicle 452 may maneuver past support members 402 without lifting itself according to the disclosed ground-engaging members.

Figure 4C illustrates a cross-sectional view 470 of another example vehicle locking assembly 472 according to aspects described herein. Aspects of vehicle locking assembly 472 are similar to those discussed above (e.g., with respect to vehicle locking assembly 404 in Figures 4A and 4B) and are therefore not necessarily redescribed in detail. As illustrated, vehicle locking assembly 472 includes fastener 464, which is configured to split into a first half 464A and a second half 464B, similar to the aspects discussed above with respect to Figure 4B. Similar to Figure 4B, fastener assembly 472 may include a crush puck or other dampening feature at location 474. However, as compared to Figure 4B, fastener boss 480 in Figure 4C is externally accessible, whereas fastener boss 460 in Figure 4B is instead illustrated as being internal to the vehicle.

In the illustrated example, fastener boss 480 is mechanically coupled to interface plate 476 (e.g., aspects of which are similar to interface plate 456) using fasteners 482, such that fasteners 482 may be removed, thereby permitting fastener boss 480 to be removed and/or replaced. Interface plate 476 includes a set of apertures that each correspond to a fastener 482.

For each fastener 482, the interior surface of interface plate 476 includes a recess larger than the corresponding aperture, in which nut plate 478 is disposed, such that the fastener 482 threads into nut plate 478, thereby securing fastener boss 480 to interface plate 476. It will be appreciated that, in other examples, fastener 482 threads directly into interface plate 476 or, as another example, fastener boss 480 threads into interface plate 476. However, use of nut plates 478 permit replacement of a nut plate as needed. In examples, a second aperture 486 is included that is offset from the aperture through which fastener 482 passes, thereby permitting a tool to be used to push nut plate 478 out of the recess from the opposite side (e.g., from the bottom side of interface plate 476, in the upward, or inward, direction, as depicted in Figure 4C). Additionally, fastener boss 480 further includes recess 484 which, after actuation of locking assembly 472 (and the resulting separation of first half 464A from second half 464B of fastener 464), may facilitate easier removal of first half 464A from fastener boss 480.

Thus, the aspects depicted in Figure 4C may offer improved access to fastener boss 480, thereby simplifying and/or expediting the process of replacement (e.g., prior to launch, after testing) and/or extracting a broken fastener stub. While the example in Figure 4C uses three fasteners 482, one of which is not pictured, to mechanically couple fastener boss 480 to interface plate 476, it will be appreciated that any number of fasteners and/or other fastening mechanisms may be used in other examples.

It will be appreciated that similar aspects may be used for any of a variety of other vehicles and/or vehicle sizes. Additionally, while Figure 4B illustrates an example in which the fastener boss is internal to the vehicle and Figure 4C illustrates an example in which the fastener boss is partially external to the vehicle, it will be appreciated that, in other examples, a fastener boss may be used that is entirely external to the frame of the vehicle. Such aspects may provide improved visibility of the fastener boss and/or of a fastener that is threaded into the fastener boss according to aspects described herein.

Figure 5A illustrates an overview of an example method 500 for releasing a vehicle that is secured using a vehicle locking assembly according to aspects described herein. In examples, aspects of method 500 are performed by a vehicle controller.

Method 500 begins at operation 502, where it is determined to maneuver the vehicle. For example, it may be determined that the vehicle has arrived at a target location and/or an indication may be received to maneuver the vehicle (e.g., from a computing device of an operator and/or from a controller of another vehicle that transported the vehicle), among other examples.

Accordingly, at operation 504, an electric signal to control an actuator (e.g., actuator 466 in Figure 4B) associated with a frangible bolt or other fastener is generated. For example, the electric signal may cause a wax motor to be heated or may cause an electric motor to actuate a ball screw, among other examples. As another example, operation 504 comprises causing ignition of a pyrotechnic fastener. It will therefore be appreciated that any of a variety of fasteners may be used according to aspects described herein.

Flow progresses to operation 506, where a motor is operated to rotate one or more ground-engaging members of the vehicle, thereby elevating the vehicle off of the vehicle locking assembly. With reference to Figures 1A-1C, ground-engaging members may be driven to rotate counterclockwise, thereby causing vehicle 102 to move leftward, as shown. As vehicle 102 moves, ground-engaging members 106 rotate, such that the ground-engaging members are each positioned such that terrain interaction features 112B and 112D are at the bottom-most point of each respective ground-engaging member (see Figure 1B), thereby elevating vehicle 102 and providing clearance with which to maneuver past support members 108.

Finally, at operation 508, the vehicle continues maneuvering past an additional support member (e.g., as may be the case when multiple support members are used, for example associated with the front and the rear of the vehicle). Due to the increased clearance resulting from operation 506, the vehicle maneuvers over the additional support member without or with reduced interaction than would have otherwise been possible.

In examples, operation 506 comprises rotating each ground-engaging member similarly, as may be the case when the vehicle is first exiting the storage configuration. Eventually, operation 506 may further comprise operating a first set of ground-engaging members (e.g., a front left and a rear right ground-engaging member) according to a first period and a second set of ground-engaging members (e.g., a front right and a rear left ground-engaging member) according to a second period. For example, the position of each ground-engaging member may be determined using a corresponding rotary encoder. As a result, the vehicle may maintain a clearance above that of its storage configuration, thereby avoiding or reducing the degree to which the vehicle contacts the support members as it maneuvers past. Additionally, or alternatively, the support members may be positioned/spaced such that the vehicle maneuvers past the support members within substantially one rotation of a ground-engaging member.

As another example, the ground-engaging members may intentionally be driven such that all of the radially closer contact regions contact or are otherwise closest to the terrain over which the vehicle is maneuvering, for example to place the vehicle back on the support members or to temporarily maneuver beneath a region having decreased vertical clearance. As another example, all but one ground-engaging member may be operated according to such aspects, thereby causing a corner of the vehicle to be comparatively higher than the other corners. As a further example, similar techniques may be used on uneven terrain to improve the degree to which the vehicle is level. It will therefore be appreciated that any of a variety of control techniques may be used to operate the disclosed ground-engaging members.

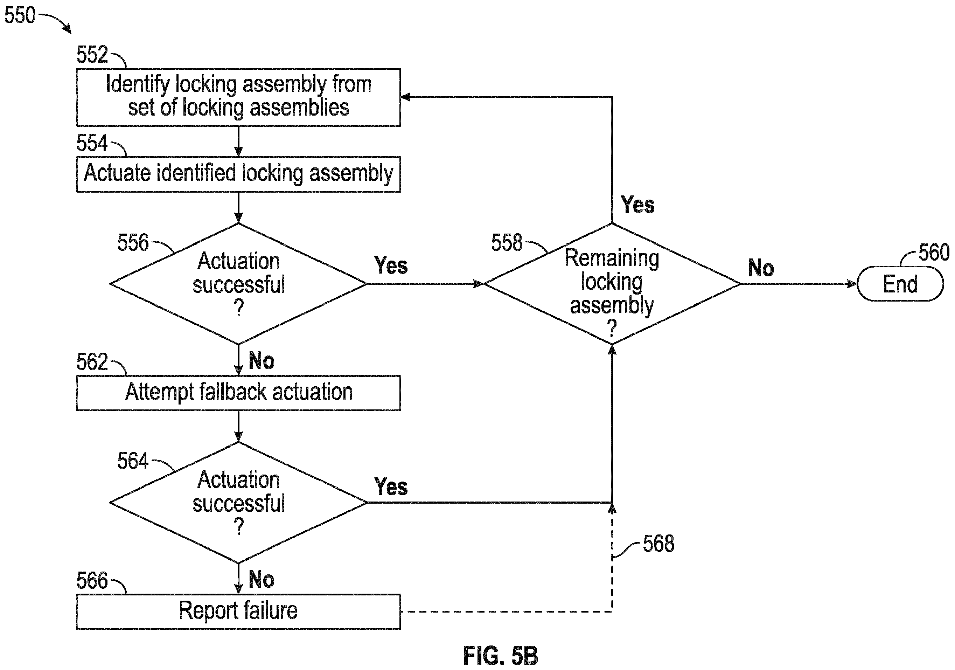

Figure 5B illustrates an overview of an example method 550 for actuating a set of locking assemblies according to aspects described herein. In examples, method 550 is performed to actuate a set of locking assemblies to release a vehicle from the locking assemblies accordingly. Method 550 is provided as an example in which the locking assemblies are actuated sequentially, thereby facilitating improved detection as to whether a fastener of the locking assembly has successfully split apart. In examples, method 500 is performed by a computer of the vehicle (e.g., a rover) or by a computer of a vehicle to which the vehicle is coupled (e.g., a lander). Additionally, or alternatively, at least a part of method 500 is performed by a remote computing device.

It will be appreciated that similar aspects may be used to actuate multiple locking assemblies contemporaneously, for example in instances where the fasteners are likely to still split at detectably different times (e.g., thereby facilitating detection that the fasteners have split) and/or if alternative or additional detection techniques are used, such as an electrical continuity check for each fastener or multiple/proximate inertial measurement units.

In examples, tradeoffs exist between sequential and contemporaneous actuation. For example, contemporaneous actuation may offer a shorter total actuation time while having a higher associated current and potentially complicating actuation detection. Conversely, sequential actuation may have a comparatively lower associated current and/or higher associated voltage (e.g., as only a subset of actuators is actuated at a given time), but a longer total actuation time. Additionally , sequential actuation may offer improved/easier actuation detection.

As illustrated, method 550 begins at operation 552, where a locking assembly is identified from a set of locking assemblies. For example, a specific order is specified, such that the set of locking assemblies are actuated according to the specific order. As another example, the order may be determined programmatically (e.g., based on a set of criteria) or randomly, among other examples.

Flow progresses to operation 554, where the identified locking assembly is actuated. Aspects of operation 554 may be similar to those discussed above with respect to operation 504 and are therefore not necessarily redescribed in detail. For instance, an electrical signal is directed to an actuator of the locking assembly that was identified at operation 552, thereby actuating an actuator of the locking assembly accordingly.

At determination 556, it is determined whether actuation was successful. In examples, determination 556 comprises evaluating sensor data from an inertial measurement unit (IMU) to determine whether the sensor data indicates successful actuation. For example, movement detected by the IMU (e.g., collected during actuation of the actuator) may be compared to a predetermined threshold and/or may be analyzed to identify a specific signature corresponding to actuation, among other examples. It will be appreciated that such aspects are provided as an example for actuation detection and, in other examples, any of a variety of alternative or additional sensors and/or corresponding techniques may be used.

If it is determined that actuation was successful at determination 556, flow branches "YES" to determination 558, where it is determined whether there are any remaining locking assemblies of the set of locking assemblies. If there are, flow branches "YES" and returns to operation 552, such that method 550 iteratively actuates the locking assemblies accordingly. Eventually, it is determined no additional locking assemblies remain, such that flow instead branches "NO" from determination 558 and concludes at operation 560.

Returning to determination 556, if it is instead determined that actuation was not successful, flow branches "NO" to operation 562, where fallback actuation of the locking assembly is attempted according to a fallback actuation scheme. In examples, a locking assembly comprises multiple actuators, such that the fallback actuation scheme comprises actuating a different actuator at operation 562 than that which was actuated at operation 554. Additionally, or alternatively, the fallback actuation scheme comprises using a backup or alternate power supply to power an actuator (e.g., the same actuator or a different actuator) of the locking assembly at operation 562. While example fallback actuation schemes are provided, it will be appreciated that any of a variety of additional or alternative fallback actuation schemes may be used in other examples. For example, operation 562 may comprise once again actuating the same actuator as was actuated at operation 554.

Flow progresses to determination 564, where it is determined whether the fallback actuation was successful. Aspects of determination 564 are similar to those discussed above with respect to determination 556 and are therefore not necessarily redescribed in detail. If it is determined that fallback actuation was successful, flow branches "YES" to determination 558, which was described above.

However, if it is instead determined that fallback actuation was unsuccessful, flow branches "NO" to operation 566, where an actuation failure is reported. It will be appreciated that any of a variety of additional or alternative operations may be performed as a result of such a determination. For example, method 550 may continue to determination 558 (as illustrated by dashed arrow 568), such that one or more remaining locking assemblies are actuated accordingly. Additionally, or alternatively, one or more additional fallback actuation techniques may be used, whereas method 550 as illustrated depicts an initial fallback actuation attempt. As illustrated, method 550 terminates at operation 566.

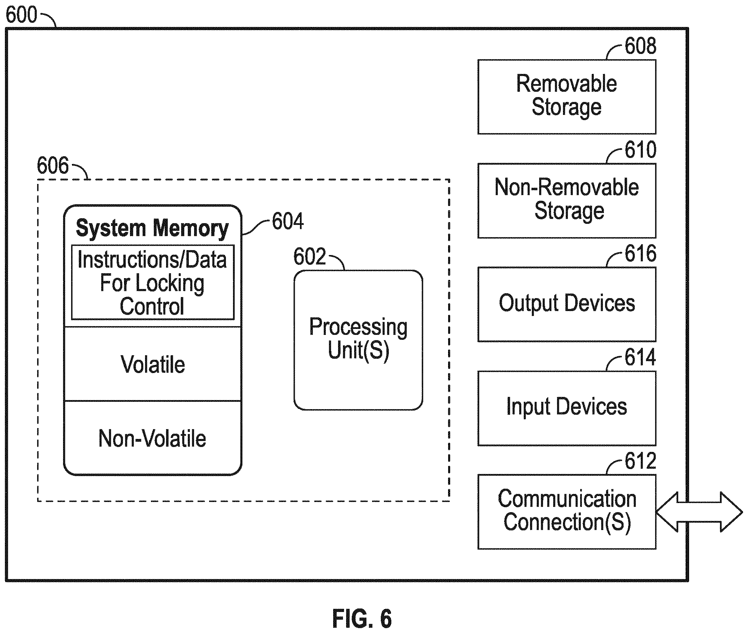

Figure 6 illustrates an example of a suitable computing environment 600 in which one or more of the present embodiments may be implemented. For example, aspects of computing environment 600 may be used by a controller, such as a vehicle controller of vehicle 102 in Figure 1A. This is only one example of a suitable computing environment and is not intended to suggest any limitation as to the scope of use or functionality. Other well-known computing systems, environments, and/or configurations that may be suitable for use include, but are not limited to, personal computers, server computers, hand-held or laptop devices, multiprocessor systems, microprocessor-based systems, programmable consumer electronics such as smart phones, network PCs, minicomputers, mainframe computers, distributed computing environments that include any of the above systems or devices, and the like.

In its most basic configuration, computing environment 600 typically may include at least one processing unit 602 and memory 604. Depending on the exact configuration and type of computing device, memory 604 (storing, among other things, APIs, programs, etc. and/or other components or instructions to implement or perform the system and methods disclosed herein, etc.) may be volatile (such as RAM), non-volatile (such as ROM, flash memory, etc.), or some combination of the two. This most basic configuration is illustrated in Figure 6 by dashed line 606. Further, environment 600 may also include storage devices (removable, 608, and/or non-removable, 610) including, but not limited to, magnetic or optical disks or tape. Similarly, environment 600 may also have input device(s) 614 such as a keyboard, mouse, pen, voice input, etc. and/or output device(s) 616 such as a display, speakers, printer, etc. Also included in the environment may be one or more communication connections, 612, such as LAN, WAN, point to point, etc.

Computing environment 600 may include at least some form of computer readable media. The computer readable media may be any available media that can be accessed by processing unit 602 or other devices comprising the computing environment. For example, the computer readable media may include computer storage media and communication media. The computer storage media may include volatile and nonvolatile, removable and non-removable media implemented in any method or technology for storage of information such as computer readable instructions, data structures, program modules or other data. The computer storage media may include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory medium, which can be used to store the desired information. The computer storage media may not include communication media.

The communication media may embody computer readable instructions, data structures, program modules, or other data in a modulated data signal such as a carrier wave or other transport mechanism and includes any information delivery media. The term "modulated data signal" may mean a signal that has one or more of its characteristics set or changed in such a manner as to encode information in the signal. For example, the communication media may include a wired media such as a wired network or direct-wired connection, and wireless media such as acoustic, RF, infrared and other wireless media. Combinations of the any of the above should also be included within the scope of computer readable media.

The computing environment 600 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise-wide computer networks, intranets, and the Internet.

The different aspects described herein may be employed using software, hardware, or a combination of software and hardware to implement and perform the systems and methods disclosed herein. Although specific devices have been recited throughout the disclosure as performing specific functions, one skilled in the art will appreciate that these devices are provided for illustrative purposes, and other devices may be employed to perform the functionality disclosed herein without departing from the scope of the disclosure.

As stated above, a number of program modules and data files may be stored in the system memory 604. While executing on the processing unit 602, program modules (e.g., applications, Input/Output (I/O) management, and other utilities) may perform processes including, but not limited to, one or more of the stages of the operational methods described herein.

Furthermore, examples of the invention may be practiced in an electrical circuit comprising discrete electronic elements, packaged or integrated electronic chips containing logic gates, a circuit utilizing a microprocessor, or on a single chip containing electronic elements or microprocessors. For example, examples of the invention may be practiced via a system-on-a-chip (SOC) where each or many of the components illustrated in Figure 6 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality described herein may be operated via application-specific logic integrated with other components of the computing environment 600 on the single integrated circuit (chip). Examples of the present disclosure may also be practiced using other technologies capable of performing logical operations such as, for example, AND, OR, and NOT, including but not limited to mechanical, optical, fluidic, and quantum technologies. In addition, examples of the invention may be practiced within a general purpose computer or in any other circuits or systems.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

## Claims

1. A system for securing a vehicle, comprising:
a support member configured to support at least a part of the vehicle;
a vehicle locking assembly to couple the vehicle to the support member, wherein the vehicle locking assembly comprises:
an aperture configured to receive a fastener; and
an actuator configured to cause the fastener to fail when actuated; and
a support shim configured to support a ground-engaging member of the vehicle.

2. The system of claim 1, wherein terrain interaction features of the ground-engaging member are spaced about an outer portion of the ground-engaging member to form a contact region that is radially closer to a hub of the ground-engaging member as compared to a contact region for one or more other terrain interaction features of the ground-engaging member.

3. The system of claim 2, wherein a support portion of the support shim corresponds to the contact region that is radially closer to the hub of the ground-engaging member.

4. The system of claim 3, wherein the support shim comprises an interaction portion that corresponds to a terrain interaction feature of the ground-engaging member.

5. The system of claim 1, wherein:
the fastener is a frangible bolt that extends through the aperture toward the vehicle; and
the actuator is a wax motor.

6. The system of claim 1, wherein a structure of the support member is determined according to topology optimization.

7. The system of claim 1, wherein the support member and the support shim are coupled to a plate, thereby enabling the vehicle to be secured to the plate in a storage configuration.

8. The system of claim 7, further comprising at least one clearance shim coupled between the support member and the plate, thereby reducing a clearance between the vehicle locking assembly and the vehicle.

9. A method for actuating a set of locking assemblies that couple a vehicle to a plate, the method comprising:
identifying a first locking assembly from the set of locking assemblies;
actuating a first actuator of the first locking assembly to release the vehicle from the plate;
determining whether actuation of the first actuator was successful; and
based on determining actuation of the first actuator was successful, actuating a second actuator of a second locking assembly of the set of locking assemblies.

10. The method of claim 9, wherein determining whether actuation of the first actuator was successful comprises processing sensor data from an inertial measurement unit of the vehicle.

11. The method of claim 9, further comprising:
determining whether actuation of the second actuator was successful; and
based on determining actuation of the second actuator was not successful, controlling the second locking assembly according to a fallback actuation scheme.

12. The method of claim 11, wherein determining actuation of the second actuator was not successful comprises evaluating sensor data of an inertial measurement unit to determine that a threshold was not exceeded in a time period during which the second actuator was actuated.

13. The method of claim 11, wherein the fallback actuation scheme comprises actuating an actuator of the second locking assembly that is different than the second actuator of the second locking assembly.

14. The method of claim 11, wherein the fallback actuation scheme comprises actuating an actuator of the second locking assembly using a different power source.

15. The method of claim 11, wherein the fallback actuation scheme comprises actuating the second actuation for a second time.

16. A system, comprising:
at least one processor; and
a memory storing instructions that, when executed by the at least one processor, causes the system to perform a set of operations, the set of operations comprising:
identifying a first locking assembly from the set of locking assemblies;
actuating a first actuator of the first locking assembly to release the vehicle from the plate;
determining whether actuation of the first actuator was successful;
when it is determined actuation of the first actuator was successful, actuating a second actuator of a second locking assembly of the set of locking assemblies; and
when it is determined actuation of the first actuator was not successful, controlling the first locking assembly according to a fallback actuation scheme.

17. The system of claim 16, wherein determining whether actuation of the first actuator was successful comprises processing sensor data from an inertial measurement unit of the vehicle.

18. The system of claim 17, wherein the sensor data is compared to a predetermined threshold to determine whether actuation of the first actuator was successful.

19. The system of claim 16, wherein the fallback actuation scheme comprises actuating an actuator of the first locking assembly that is different than the first actuator of the first locking assembly.

20. The system of claim 16, wherein the fallback actuation scheme comprises actuating an actuator of the first locking assembly using a different power source.
